# EUROPEAN PATENT APPLICATION

(11) **EP 0 582 734 A1**
(43) Date of publication of application: **16.02.1994**
(21) Application number: 92113697.4
(22) Date of filing: 11.08.1992
(51) Int. Cl.: B60N 2/44, H05B 3/34

(54) **An electrically heated seat for motor vehicles**

(71) Applicant: LEDA Logarithmic Electrical Devices for Automation S.r.l., I-10121 Torino (IT)
(72) Inventor: Lazzaroni, Domenico, I-10100 Torino (IT)
(74) Representative: Plebani, Rinaldo

(57) **Abstract**

An electrically heated seat for vehicles is described; its main characteristic is that at least part of the padding of the seat squab and seat back is formed directly of electrically conductive elastomeric material the electrical resistance of which varies according to the compression exerted on it; in this part of the padding are embedded at least one pair of electrical terminals of opposite polarity arranged so that electric current flowing from one terminal to the other is forced to traverse the said part of the padding.

## Description

This invention relates to an electrically heated seat for vehicles. Electrically heated seats for vehicles are known: the heating is achieved by electrical resistances embedded in the foam padding of the seat, or placed between this and the upholstery of the seat.

This system is not without drawbacks; in the first case, heat transmission through the foam padding is problematic, in that heating is slow and uneven; in the second case, the electrical resistances which, because of their position are fine wires, run the risk of being damaged eventually by the movement of the seat's user, thereby reducing or ending the heating effect.

The object of the invention is to provide an electrically heated seat free from the disadvantages described above, which works reliably, and distributes heat evenly over the whole of the seat.

The above object is met by the invention, which relates to an electrically heated seat for motor vehicles, of the type comprising a padded seat squab and seat back and means for electrically heating at least one of the said seat squab and seat back, characterised by the fact that at least part of the seat's padding is formed directly of electrically conductive elastomeric material the electrical resistance of which varies with the compression exerted on it, at least one pair of electrical terminals of opposite polarity being embedded in this part of the padding and so positioned that electric current flowing from one terminal to the other is forced to traverse this part of the padding, this latter having a sufficiently high electrical resistance to become heated by the Joule effect.

For a better understanding of the invention, there follows a non-limitative description of embodiments thereof with reference to the attached drawings, in which:
Figure 1 shows a seat made according to the invention;
Figures 2 and 3 show details of the seat of Figure 1 on an enlarged scale;
Figure 4 shows a possible variation of the seat of Figure 1; and
Figure 5 shows a detail of the seat of Figure 4 on an enlarged scale.

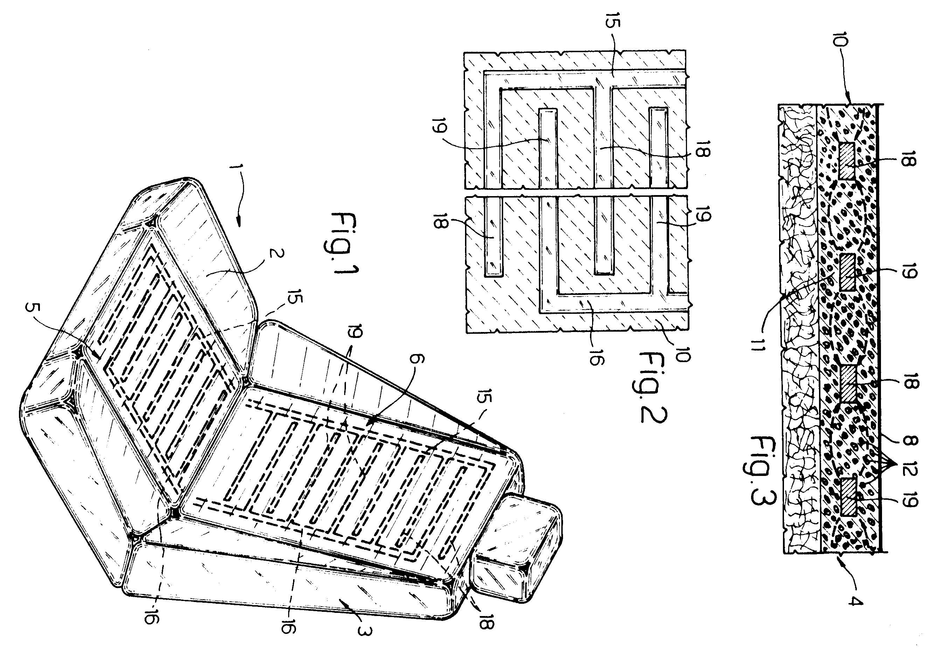

Referring to the drawings, Figures 1 and 3 show a seat 1 for any type of vehicle, not illustrated for simplicity, for example a motor car; the seat 1 is padded and comprises a squab 2 and a seat back 3 each including a known frame, not illustrated for simplicity, and padding 4, a detail of which is shown in section in Figure 3, and which is covered on the outside of the seat 1, that is on the contact surface 5 of the seat squab 2 and the contact surface 6 of the seat back 3, which in use will come into contact with the user, with a covering "skin" 8 made from a sheet material sewn and/or heat bonded to, or heat formed with the padding 4, so that the skin adheres to the padding perfectly.

According to the invention, the padding 4, or in the example illustrated at least a surface layer 10 immediately underlying the skin 8, is formed of an electrically conductive elastomeric material the electrical resistance of which is variable in dependence on the compression exerted on it. Such a material, and a process for its manufacture, are described in Italian patents nos 1206890, 1210777 and 1211401, in the name of the Applicant, the contents of which are incorporated herein by reference as far as necessary. As shown schematically in the large scale detail illustrated in Figure 3, this material comprises a resiliently deformable, non conductive elastomeric matrix 11, subjected to a triaxial precompression and having a plurality of open cells, which are not visible in the drawing as they are filled with particles of electrically conductive material 12 which are uniformly distributed throughout the matrix 11 in such a way as to form chains of particles, in close contact with each other throughout the matrix.

In this way the particles 12 ensure that the material forming the layer 10 always has some electrical conductivity, so that this layer 10 simultaneously performs a dual function as part of the padding and as an electrical resistor; by subjecting the layer 10 to compression (for example by the stress consequent on suitable heat forming techniques) that is by increasing the compression normally exerted on the layer 10 as a result of the manufacturing process of the material from which it is made, this conductivity can be further increased, as the particles 12 are pressed closer together thus reducing the electrical resistance of the padding 10. Electric current is supplied to the padding 10 by way of at least one pair of electrical terminals 15, 16, of opposite polarity, which are embedded in the layer 10, in this case in the matrix 11, and arranged so that current from one terminal to another is forced to flow uniformly through the entire layer 10. The triaxial precompression state of the component material is adjusted so that the part 10 of the padding 4 presents a predetermined overall relatively low electrical resistance between the two terminals 15 and 16, such that during use the Joule effect heating of the layer 10, as a result of a potential difference between terminals 15 and 16, is relatively low so as to keep down energy consumption. The terminals 15 and 16 are comb-shaped, and have respective "teeth" 1 or transverse elements 18, 19, which extend across the entire width of the part 10 of the padding, both on the seat squab 2 and the seat back 3 (Figure 1) towards the opposite terminal and lie between the teeth of the opposite terminal so that they alternate (Figures 2 and 3): in this way, when voltage is applied between terminals 15 and 16 the electric current flows in the path indicated by the arrows (Figure 3) and is transmitted, for example, from terminal 15 to terminal 16 through the surface layer 10 of the padding, which layer acts as a resistor and consequently heats evenly, passing heat to the user sitting on the seat 1 through the "skin" or covering layer 8 covering the surfaces 5 and 6, which "skin", in order to avoid dispersing the electric current, is preferably made from an electrically insulating material, for example from synthetic plastics imitation leather or suede or from a synthetic fibre.

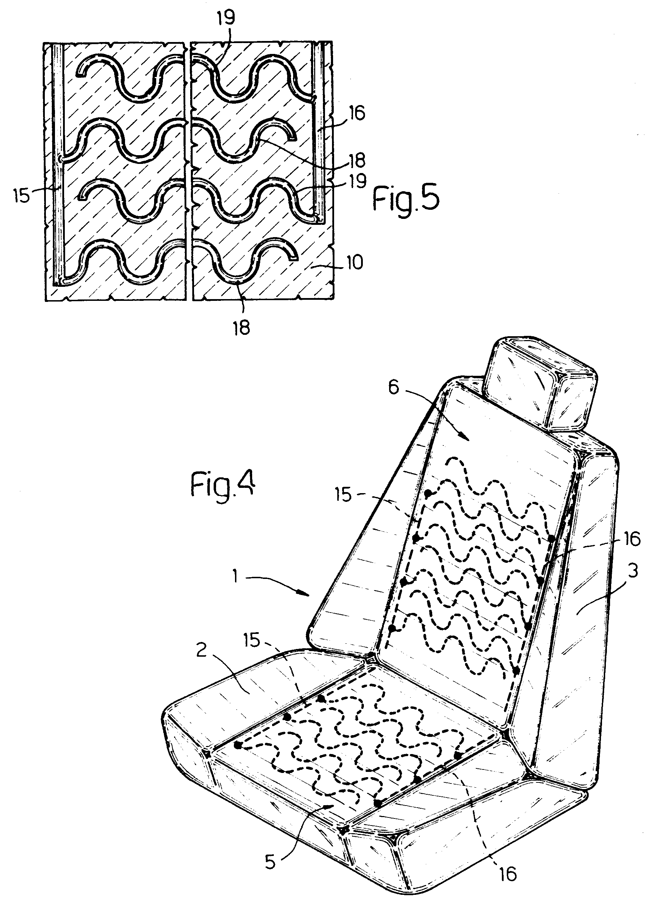

In Figures 4 and 5, in which details similar to or the same as described above are given the same numbers, for the sake of simplicity, in order to avoid making the seat 1 too stiff, the electrical terminals 15 and 16, or at least their teeth or transverse elements 18 and 19, are formed by corrugated metal elements so as to be resiliently deformable; in addition, these elements are preferably not disposed in the same plane but lie in two different planes, both within the layer 10. In a possible variation, not shown for the sake of simplicity, the terminals 15 and 16 can be made of two corrugated metal mesh elements embedded in layer 10.

From the above description the advantages of the invention will be apparent; the seat 1 is easily manufactured as the material making up the padding layer 10 is both chemically and physically similar to the remaining padding 4 and the two can be easily formed into one unit. The seat also ensures an even heating of the seat squab 2 and the seat back 3 as the heat does not have to be transmitted through the padding but is generated by the padding itself. The seat is also totally reliable as the only metal parts needed are the two terminals which, however, as they are not the resistances, can be made and positioned so as to be impossible to break, for example by making them an integral part of the frame of the seat 1.

## Claims

1. An electrically heated seat for vehicles, of the type comprising seat squab and seat back and means for electrically heating at least the seat squab or the seat back, characterised by the fact that at least part of the padding of the seat squab is formed directly from an electrically conductive elastomeric material the electrical resistance of which varies with the compression exerted on it; at least one pair of electrical terminals of opposite polarity being embedded in this part of the padding and so positioned that electric current flowing from one terminal to the other is forced to traverse this part of the padding, this latter having a sufficiently high electrical resistance to become heated by the Joule effect.

2. A heated seat according to Claim 1, characterised by the fact that the said part of the padding made of the said electrically conductive elastomeric material the electrical resistance of which varies with the compression exerted on it, is subject to permanent triaxial compression of predetermined value.

3. A heated seat according to Claim 1 or Claim 2, characterised by the fact that the said part of the padding is externally covered, on the surfaces of the said seat squab and seat back, intended to come into contact with a user, with a covering skin made from electrically insulating material.

4. A heated seat according to any preceding claim, characterised by the fact that said electrical terminals of opposite polarity are comb-shape with respective teeth or transverse elements extending across the whole width of the said part of the padding towards the other terminal, and between the transverse teeth of this other terminal.

5. A heated seat according to any preceding claim, characterised by the fact that the said electrical terminals of opposite polarity are made of corrugated metal elements in such a way as to be resiliently deformable.
